# EUROPÄISCHE PATENTSCHRIFT

(11) **EP 0 704 498 B1**
(45) Veröffentlichungstag und Bekanntmachung des Hinweises auf die Patenterteilung: **10.03.1999**
(21) Anmeldenummer: 95114632.3
(22) Anmeldetag: 18.09.1995
(51) Int. Cl.: C09C 1/24, C01G 49/06

(54) **Höchsttransparente gelbe Eisenoxidpigmente, Verfahren zu ihrer Herstellung sowie deren Verwendung**
Highly transparent yellow iron oxide pigments, process for their preparation and their use
Pigments d'oxyde de fer jaunes, très transparents, procédé pour leur préparation et leur utilisation

(30) Priorität: 30.09.1994 DE 4434973
(43) Veröffentlichungstag der Anmeldung: 03.04.1996
(73) Patentinhaber: BAYER AG, 51368 Leverkusen (DE)
(72) Erfinder: Ulrike, Pitzer, Dr., D-47800 Krefeld (DE)

(56) Entgegenhaltungen:
- DE-A- 3 026 686
- GB-A- 2 271 766

## Beschreibung

Die vorliegende Erfindung betrifft höchsttransparente Eisenoxidpigmente mit hoher Farbsättigung, Verfahren zu ihrer Herstellung sowie deren Verwendung zur Einfärbung von Lacken und Kunststoffen.

Eisenoxidpigmente mit einer mittleren Teilchengröße von kleiner 0,1 µm werden als transparente Eisenoxidpigmente bezeichnet, da sie für sichtbares Licht durchlässig sind. Alternativ zur Teilchengröße wird auch häufig die spezifische Oberfläche als Maß für die Größe der Partikel verwendet. Insbesondere bei nadelförmigen Teilchen bietet sich dieses Maß an, um die Angabe von Teilchengrößen in verschiedenen Raumrichtungen zu vermeiden. Dabei sind Pulver mit spezifischen Oberflächen nach BET von mehr als 80 m²/g in der Regel als transparent zu bezeichnen. Hochtransparent sind Pigmente mit spezifischen Oberflächen von mehr als 100 m²/g.

Transparente Eisenoxidpigmente finden vor allem Verwendung bei der Herstellung von Effekt-Autolacken, Holzlasuren und zum Einfärben transparenter Kunststoffe.

Transparente, gelbe Eisenoxidpigmente werden in der Regel durch Fällung von Eisen(II)hydroxiden oder -carbonaten im sauren oder alkalischen pH-Bereich und anschließende Oxidation zu Fe(III)-oxidhydroxiden synthetisiert. Die Fällung von gelbem α-FeOOH im alkalischen pH-Bereich ist in den Patenten US-A 2 558 303 und US-A 2 558 304 beschrieben. Die so hergestellten Produkte sind in US-A 2 558 302 beschrieben und beansprucht.

Die Herstellung unter Alkali-Überschuß führt bei hoher Begasung zu hochtransparenten Pigmenten, deren Feinteiligkeit und Transparenz durch Verwendung von Soda anstelle von NaOH als Fällungsmittel sowie durch den Einsatz von Keimmodifikatoren, wie z.B. SiO₂ oder Hydroxycarbonsäuren, noch gesteigert werden kann. Die Pigmente haben aber den Nachteil, daß sie bei sehr hoher Transparenz in der Farbe ungesättigt werden und häufig einen unerwünschten, zum Teil schmutzig grünstichigen, zum Teil bräunlichen Farbton aufweisen.

In der US-A 3 974 267 wird eine Verfahrensvariante zum alkalischen Fällungsverfahren beschrieben, wobei es durch Keimbildung bei hoher Begasung und Pigmentaufbau bei niedriger Begasung gelingt, den Farbton der Pigmente zu verbessern. Die so hergestellten Pigmente sind jedoch mit 20 nm Teilchendurchmesser und 200 nm (= 0,2 µm) Länge vergleichsweise groß und fallen damit nicht mehr in den höchsttransparenten Bereich.

In der US-A 4 256 508 wird die Herstellung von transparenten, gelben Pigmenten mit verbesserter Farbstärke über Fäll- und Oxidationsverfahren im sauren ph-Bereich beschrieben, wobei die Verbesserung der koloristischen Eigenschaften durch Zufügen von Fluoriden erreicht wird. Die notwendige Menge an Fluoriden ist mit 1 bis 100 mol-%, bevorzugt 15 bis 20 mol-% relativ hoch. Um über Fäll- und Oxidationsverfahren im sauren pH-Bereich höchsttransparente Pigmente herstellen zu können, müssen entweder Keimmodifikation eingesetzt oder als Fällungsmittel Natriumcarbonat oder Ammoniak verwendet werden. In den Beispielen der US-A 4 256 508 wird der Weg der Sodafällung gewählt. Dies führt jedoch zu braunstichigen Pigmenten.

Reifungsschritte am Ende der Pigmentbildung sind bei der Herstellung von opaken Pigmenten bekannt. Auch bei der Synthese transparenter Pigmente sind Reifungsschritte beschrieben, so im Patent US-A 4 256 508 durch einstündiges Erhitzen auf 90°C nach beendeter Pigmentbildung. In der DE-C 2 556 406 sind Reifungsschritte bei der Herstellung von Keimen für opake Pigmente beschrieben. Diese Reifungsschritte finden jedoch bei Zwischenstufen im Oxidationsprozeß statt, wobei das ausgefällte Eisen(II)-hydroxid noch nicht vollständig oxidiert ist.

Es wurde gefunden, daß man über Fällverfahren im sauren pH-Bereich hochtransparente, bei geeigneter Fahrweise sogar höchsttransparente, gelbe Eisenoxidpigmente herstellen kann. Diese Pigmente unterscheiden sich von den bisher bekannten hochtransparenten, gelben Pigmenten dadurch, daß sie eine besonders hohe Farbsättigung aufweisen.

Gegenstand dieser Erfindung ist auch ein Verfahren zur Herstellung von hochtransparenten, farblich gesättigten, gelben α-FeOOH Eisenoxidpigmenten über die Verfahrensschritte Keimfällung, Keimoxidation, Keimreifung und Pigmentaufbau. Das Verfharen ist dadurch gekennzeichnet,
a) aus einer Eisen(II)-salzlösung durch Zugabe eines Fällungsmittels 30 bis 70 % des eingesetzten Eisens als Eisen(II)-hydroxid ausgefällt werden,
b) im sauren pH-Bereich unter Einsatz von Keimmodifikatoren aus der Gruppe der Phosphate und Hydroxycarbonsäuren das ausgefällte Eisen(II)-hydroxid zu feinteiligen α-FeOOH-Keimen vollständig oxidiert wird,
c) anschließend die Keime durch eine thermische Behandlung gereift werden und
d) das restliche Eisen(II) ausgefällt und ebenfalls zu α-FeOOH oxidiert wird.

Dabei ist der Zwischenschritt der Keimreifung erfindungswesentlich.

Als Eisen(II)-salzlösung wird bevorzugt Eisen(II)-sulfat, als Fällungsmittel bevorzugt NaOH und als Oxidationsmittel bevorzugt Luft eingesetzt. Der Einsatz anderer Eisensalze, Fällungsmittel oder Oxidationsmittel ist aber möglich. Die Keimreifung erfolgt durch Erhitzen der Keimsuspension auf Temperaturen zwischen 50 °C und dem Siedepunkt. Die Dauer der Reifung hängt von der Temperatur, dem pH-Wert der Suspension und der Feinteiligkeit des Keimes ab; sie liegt bevorzugt zwischen 15 min und vier Stunden. Der Reifungsschritt führt jeweils im Vergleich zum Einsatz ungereifter Keime zu einer Verbesserung der koloristischen Pigmenteigenschaften, wobei die Transparenz der Pigmente gar nicht oder nur unwesentlich verschlechtert wird. Die Erhaltung der Transparenz ist besonders erstaunlich, da durch den Einsatz gereifter Keime im Vergleich zu ungereiften Keimen die spezifische Oberfläche der fertigen Pigmente erheblich erniedrigt wird.

Da die spezifische Oberfläche ein Maß für die Feinteiligkeit der Pigmente darstellt und diese wiederum die Transparenz wesentlich mitbestimmt, hätte man bei einer Erniedrigung der spezifischen Oberfläche auch eine deutliche Verschlechterung der Transparenz erwartet. Dies ist aber nicht der Fall.

Die in ihren optischen Eigenschaften im Vergleich zu den bisher bekannten transparenten Eisenoxidpigmenten herausragenden Pigmente sind dadurch erhältlich, daß extrem feinteilige Keime mit spezifischen Oberflächen nach BET von mehr als 170 m²/g hergestellt, diese reift und zu Pigmenten mit spezifischen Oberflächen nach BET von mehr als 120 m²/g und weniger als 150 m²/g aufbaut werden. Pigmente mit geringerer Feinteiligkeit als 120 m²/g sind nicht mehr höchsttransparent, solche mit höherer Feinteiligkeit als 150 m²/g weisen keine ausreichend hohe Sättigung auf. Die sehr hohe Feinteiligkeit der Keime kann durch gute Rührung, hohe Begasungsgeschwindigkeit und eine geringe Viskosität der Suspension, z.B. durch geringe Feststoffgehalte, erreicht werden.

Die so erhältlichen Pigmente zeichnen sich durch höchste Transparenz bei gleichzeitig hoher Farbsättigung aus. Dabei wird die Transparenz durch den CIELAB-Farbabstand ΔE*_{ab} zwischen einer 100 µm dicken Schicht von mit 5 Gew.-% bezogen auf den Lacktrockenrückstand pigmentierten Lack und unpigmentiertem Klarlack über einem schwarzen Untergrund gekennzeichnet; dieser Farbabstand beträgt bei den erfindungsgemäß besonders bevorzugten Pigmenten weniger als 4,5 CIELAB-Einheiten. Die Farbsättigung oder Buntheit C*_{ab} wird über einem weißen Untergrund bestimmt und beträgt bei den erfindungsgemäß besonders bevorzugten Pigmenten gleich oder mehr als 45 CIELAB-Einheiten. Dabei ist die Kombination der außerordentlich hohen Transparenz und der hohen Buntheit als neu zu betrachten.

Die erfindungsgemäßen Pigmente eignen sich besonders zum Einfärben von transparenten Lacken und Kunststoffen. Die Verwendung der erfindungsgemäßen Pigmente zur Einfärbung von Lacken und Kunststoffen ist daher ebenfalls Gegenstand der Erfindung.

### Meßmethoden

Die Bestimmung der spezifischen Oberfläche nach BET erfolgt gemäß nach der N₂-1-Punkt-Methode gemäß DIN 66131.

Die farbmetrischen Daten werden bestimmt, indem das zu untersuchende Pigment mit einem Gehalt von 5 Gew.-% bezogen auf Lacktrockenrückstand in einem Lack auf Alkydal-F48-Basis (mittelöliges Alkydalharz auf Basis trocknender pflanzlicher Fettsäuren; (Handelsprodukt der Bayer AG) vollständig dispergiert wird. Für die Dispergierung ist in der Regel einer vierstündige Mahlung auf einer Planetenmühle ausreichend. Der Lack wird in 100 µm-Küvetten gefüllt. Für die Bestimmung der koloristischen Daten werden mit einem Farbmeßgerät der Geometrie d/8 die Normfarbwerte des Lackes über einem weißen Glasstandard gemessen. Nach DIN 6174, Lichtart C, 2 ° Normalbeobachter wird die Sättigung oder Buntheit C*_{ab} berechnet. Für die Bestimmung der Transparenz wird derselbe Lack über einem schwarzen Glasstandard gemessen. Als Maß für die Transparenz wird der gemessene Farbabstand ΔE*_{ab} im Vergleich zu einer Messung von unpigmentiertem Klarlack über demselben schwarzen Untergrund verwendet. Im Idealfall vollständig transparenter Pigmente wäre dieser Farbabstand Null. In der Praxis sind Pigmente bis zu einem Farbabstand über Schwarz zwischen unpigmentiertem und pigmentiertem Lack von weniger als ca. 8 CIELAB-Einheiten als hochtransparent zu bezeichnen. Höchsttransparent sind Pigmente, bei denen dieser Farbabstand weniger als 4,5 CIELAB-Einheiten beträgt.

Im folgenden wird die Erfindung beispielhaft erläutert, ohne daß hierin eine Einschränkung zu sehen ist.

### Beispiele

### Beispiel 1

15 l Eisensulfatlösung mit einem Gehalt von 150 g FeSO₄/l wurden bei 28 °C vorgelegt und innerhalb von 20 min wurden 2 801 g einer 25,4 %igen NaOH-Lösung zudosiert. Anschließend wurden 34,6 g einer 57 %igen Glykolsäurelösung zugefügt und das ausgefällte Eisen(II)-hydroxid durch Begasung mit 800 l Luft/h zu α-FeOOH oxidiert. Der so hergestellte Keim hat eine spezifische Oberfläche nach BET von 199 m²/g. Die Keimsuspension wurde unter Stickstoffbegasung auf 80 °C aufgeheizt und unter weiterer Luftbegasung 30 min bei dieser Temperatur gehalten. Danach wurde der pH-Wert auf pH 5 eingestellt und unter gleichzeitiger Luftbegasung mit 800 l/h weiter NaOH zudosiert, wobei der pH-Wert bei pH 5 gehalten wird. Die NaOH-Zuführung wurde beendet, als der Rest-FeSO₄-Gehalt kleiner als 5 g/l betrug. Das Pigment wurde abfiltriert, salzfrei gewaschen und getrocknet.

Die spezifische Oberfläche des Pigmentes beträgt 125 m²/g. Das Pigment wurde in einem Lack auf Alkydal-F48-Basis dispergiert und die farbmetrischen Daten wurden bestimmt. Der Farbabstand ΔE*_{ab} über Schwarz in Bezug zu einem unpigmentierten Lack beträgt 3,9 CIELAB-Einheiten. Die Sättigung C*_{ab} über einem weißen Untergrund wird zu 45,2 CIELAB-Einheiten bestimmt. Die erhaltenen Meßwerte sind im Vergleich zu denen der kommerziell erhältlichen Produkte Sicotrans L1915 und L1916 der Fa. BASF, Cappoxyt 4214X der Fa. Cappelle sowie Transoxide yellow 10-30-AC-0553 der Fa. Hilton-Davis in Tabelle 1 eingetragen.

### Beispiel 2

Es wurde wie in Beispiel 1 verfahren, jedoch erfolgte die Reifung 30 min bei 60 °C. Die spezifische Oberfläche nach BET des fertigen Pigmentes beträgt 142 m²/g. Der Farbabstand Δ E*_{ab} über Schwarz in Bezug zu einem unpigmentierten Lack beträgt 3,0 CIELAB-Einheiten. Die Sättigung C*_{ab} über einem weißen Untergrund wurde zu 45,0 CIELAB-Einheiten bestimmt. Die erhaltenen Meßwerte sind in Tabelle 1 eingetragen.

### Beispiel 3 (Vergleichsbeispiel)

Es wurde wie unter Beispiel 1 verfahren, allerdings ohne den Schritt der Keimreifung. Die spezifische Oberfläche nach BET des fertigen Pigmentes beträgt 162 m²/g. Der Farbabstand Δ E*_{ab} über Schwarz in Bezug zu einem unpigmentierten Lack beträgt 3,7 CIELAB-Einheiten. Die Sättigung C*_{ab} über einem weißen Untergrund wurde zu 43,4 CIELAB-Einheiten bestimmt. Die erhaltenen Meßwerte sind in Tabelle 1 eingetragen.

### Beispiel 4 (Vergleichsbeispiel gemäß US-A 2 558 302, Beispiel 3)

44,9 g Wasserglas (26,7 % SiO₂), 3124 g NaOH-Lösung (25,2 %ig) und 7 440 ml Wasser wurden vorgelegt und auf 25 °C temperiert. Dazu wurden unter Rühren 10 l einer FeSO₄-Lösung mit einem Gehalt von 103 g FeSO₄/l zugefügt und 5 min gerührt. Anschließend wurde der Niederschlag durch Begasung mit 50 l Luft/h zu α-FeOOH oxidiert. Nach beendeter Oxidation wurde die Suspension 30 min lang aufgekocht. Der Niederschlag wurde filtriert, salzfrei gewaschen und getrocknet.

Die spezifische Oberfläche nach BET des fertigen Pigmentes beträgt 202 m²/g. Das Pigment ist braunstichig. Der Farbabstand Δ E*_{ab} über Schwarz in Bezug zu einem unpigmentierten Lack beträgt 5,2 CIELAB-Einheiten. Die Sättigung C*_{ab} über einem weißen Untergrund wurde zu 32,4 CIELAB-Einheiten bestimmt. Die erhaltenen Meßwerte sind in Tabelle 1 eingetragen.

### Beispiel 5 (Vergleichsbeispiel gemäß US-A 4 256 508)

15 l einer FeSO₄-Lösung mit einem Gehalt von 14,6 g FeSO₄/l wurden vorgelegt. 63 g NaF wurden unter Rühren in der Lösung gelöst und die Lösung wurde auf 20 °C temperiert. Anschließend wurden 750 ml einer Natriumcarbonatlösung mit einem Na₂CO₃-Gehalt von 167 g/l zügig zugegeben. Die Oxidation erfolgt durch Begasung mit 800 l Luft/h. Die Temperatur wurde während der Oxidationsphase auf 20 °C gehalten. Nach beendeter Oxidation wurde die Suspension eine Stunde bei 90 °C gereift. Danach wurde das Pigment abfiltriert, salzfrei gewaschen und getrocknet.

Die spezifische Oberfläche nach BET des fertigen Pigmentes beträgt 167 m²/g. Das Pigment ist deutlich gelber und gesättigter als das Pigment aus Beispiel 4, aber immer noch leicht braunstichig. Der Farbabstand Δ E*_{ab} über Schwarz in Bezug zu einem unpigmentierten Lack beträgt 4,9 CIELAB-Einheiten. Die Sättigung C*_{ab} über einem weißen Untergrund wurde zu 35,1 CIELAB-Einheiten bestimmt. Die erhaltenen Meßwerte sind in Tabelle 1 eingetragen.

**Tabelle 1**

| Spezifische Oberfläche, Farbsättigung über Weiß und Farbabstand über Schwarz verschiedener transparenter, gelber Eisenoxidpigmente | | | |
|---|---|---|---|
| Pigment | BET (m²/g) | C*_{ab} über Weiß (CIELAB-Einheiten) | ΔE*_{ab} über Schwarz (CIELAB-Einheiten) |
| Beispiel 1 | 125 | 45,2 | 3,9 |
| Beispiel 2 | 142 | 45,0 | 3,0 |
| Beispiel 3 (= Vergleichsbeispiel zu 1 u. 2) | 162 | 43,4 | 3,7 |
| Beispiel 4 (= Vergleichsbeispiel zu US 2 558 302) | 202 | 32,4 | 5,2 |
| Beispiel 5 (= Vergleichsbeispiel zu US 4 256 508) | 167 | 35,1 | 4,9 |
| Sicotrans L 1915 | 112 | 42,6 | 6,4 |
| Sicotrans L 1916 | 100 | 44,3 | 5,3 |
| Cappoxyt 4214 x | 113 | 46,3 | 5,2 |
| Transoxide yellow | 111 | 41,7 | 10,0 |

## Patentansprüche

1. Verfahren zur Herstellung hochtransparenter, gelber Eisenoxidpigmente der α-FeOOH-modifikation mit hoher Farbsättigung durch Keimfällung, Keimoxidation, Keimreifung und Pigmentbau, dadurch gekennzeichnet, daß
a) aus einer Eisen(II)-salzlösung durch Zugabe eines Fällungsmittel 30 bis 70 % des eingesetzten Eisens als Eisen(II)-hydroxid ausgefällt werden,
b) im sauren pH-Bereich unter Einsatz von Keimmodifikatoren aus der Gruppe der Phosphate und Hydroxycarbonsäuren das ausgefällte Eisen(II)-hydroxid zu feinteiligen α-FeOOH-Keimen vollständig oxidiert wird,
c) anschließend diese Keime durch eine thermische Behandlung gereift werden und
d) das restliche Eisen(II) ausgefällt und ebenfalls zu α-FeOOH oxidiert wird.

2. Verfahren gemäß Anspruch 1, dadurch gekennzeichnet, daß die Reifung durch Erhitzen der Keimsuspension auf Temperaturen zwischen 50 °C und Siedetemperatur erfolgt.

3. Verfahren gemäß Anspruch 1 oder 2, dadurch gekennzeichnet, daß die Reifung zwischen 15 min und vier Stunden lang durchgeführt wird.

4. Verfahren zur Herstellung höchsttransparenter, gelber Eisenoxidpigmente der α-FeOOH-Modifikation mit hoher Farbsättigung, dadurch gekennzeichnet, daß
a) aus einer Eisen(II)-salzlösung durch Zugabe eines Fällungsmittels 30 bis 70 % des eingesetzten Eisens als Eisen(II)-hydroxid ausgefällt werden,
b) im sauren pH-Bereich unter Einsatz von Keimmodifikatoren das ausgefällte Eisen(II)-hydroxid zu feinteiligen α-FeOOH-Keimen vollständig oxidiert wird, wobei durch hohe Begasungsgeschwindigkeiten und geringe Viskosität der Suspension die spezifische Oberfläche nach BET der Keime auf mehr als 170 m²/g eingestellt wird,
c) anschließend diese Keime durch eine thermische Behandlung gereift werden und
d) das restliche Eisen(II) ausgefällt und ebenfalls zu α-FeOOH oxidiert wird, wobei die spezifische Oberfläche nach BET des fertigen Pigmentes durch Optimierung der Reifungszeit in Verfahrensschritt c) am Ende mehr als 120 m²/g und weniger als 150 m²/g beträgt.

5. Höchsttransparente, gelbe Eisenoxidpigmente der α-FeOOH-Modifikation, erhältlich gemäß Anspruch 4, dadurch gekennzeichnet, daß gleichzeitig
a) der Farbabstand über einem schwarzen Untergrund zwischen einer 100 µm dicken Schicht eines unpigmentierten Klarlackes und eines mit 5 Gew.-% bezogen auf den Lacktrockenrückstand pigmentierten Lackes weniger als 4,5 CIELAE-Einheiten beträgt und
b) eine Messung desselben Lackes über einem weißen Untergrund eine Sättigung C*_{ab} von gleich oder mehr als 45 CIELAB-Einheiten aufweist.

6. Verwendung gelber Eisenoxidpigmente gemäß Anspruch 5 zur Einfärbung von Lacken und Kunststoffen.

## Claims

1. Process for the production of highly transparent, yellow iron oxide pigments of the α-FeOOH modification having elevated colour saturation by nucleus precipitation, nucleus oxidation, nucleus ripening and pigment buildup, characterised in that
a) 30 to 70% of the iron used is precipitated as iron(II) hydroxide from an iron(II) salt solution by addition of a precipitant,
b) the precipitated iron(II) hydroxide is completely oxidised to finely divided α-FeOOH nuclei in the acidic pH range using nucleus modifiers from the group of phosphates and hydroxycarboxylic acids,
c) these nuclei are then ripened by thermal treatment and
d) the remaining iron(II) is precipitated and also oxidised to α-FeOOH.

2. Process according to claim 1, characterised in that ripening is performed by heating the nucleus suspension to temperatures of between 50°C and boiling temperature.

3. Process according to claim 1 or 2, characterised in that ripening is performed for between 15 min and 4 hours.

4. Process for the production of very highly transparent, yellow iron oxide pigments of the α-FeOOH modification having elevated colour saturation, characterised in that
a) 30 to 70% of the iron used is precipitated as iron(II) hydroxide from an iron(II) salt solution by addition of a precipitant,
b) the precipitated iron(II) hydroxide is completely oxidised to finely divided α-FeOOH nuclei in the acidic pH range using nucleus modifiers, wherein the BET specific surface area of the nuclei is adjusted to greater than 170 m²/g by elevated gas bubbling rates and low viscosity of the suspension,
c) these nuclei are then ripened by thermal treatment and
d) the remaining iron(II) in precipitated and also oxidised to α-FeOOH, wherein, by optimising the ripening time in process stage c), the BET specific surface area of the finished pigment is ultimately more than 120 m²/g and less than 150 m²/g.

5. Very highly transparent iron oxide pigments of the α-FeOOH modification obtainable according to claim 4, characterised in that simultaneously
a) the colour difference over a black substrate between a 100 µm thick layer of an unpigmented clear lacquer and a lacquer pigmented with 5 wt.%, relative to the lacquer dry residue, is less than 4.5 CIELAB units and
b) measurement of the same lacquer over a white substrare reveals a saturation C*_{ab} of greater than or equal to 45 CIELAB units.

6. Use of yellow iron oxide pigments according to claim 5 for colouring lacquers and plastics.

## Revendications

1. Procédé pour préparer des oxydes de fer pigmentaires jaunes de la forme α-FeOOH à haute transparence et haute saturation de couleur par précipitation de germes, oxydation de germes, maturation des germes et formation du pigment, caractérisé en ce que
a) à partir d'une solution de sel de fer-II, on précipite à l'aide d'un agent précipitant 30 à 70 % du fer mis en oeuvre à l'état d'hydroxyde de fer-II.
b) à pH acide et avec utilisation d'agents modifiants des germes du groupe des phosphates et des acides hydrocarboxyliques, on oxyde complètement l'hydroxyde de fer-II précipité en germes fins d'α-FeOOH,
c) on procède ensuite à la maturation de ces germes par un traitement à la chaleur et
d) on précipite le reste du fer-II et on l'oxyde également en α-FeOOH.

2. Procédé selon la revendication 1, caractérisé en ce que la maturation est réalisée par chauffage de la suspension de germes à des températures comprises entre 50°C et la température d'ébullition.

3. Procédé selon la revendication 1 ou 2, caractérisé en ce que la maturation est exécutée en une durée de 15 min à 4 h.

4. Procédé pour la préparation d'oxydes de fer pigmentaires jaunes de la forme α-FeOOH à haute transparence et haute saturation de couleur, caractérisé en ce que
a) à partir d'une solution de sel de fer-II, on précipite à l'aide d'un agent précipitant 30 à 70 % du fer mis en oeuvre à l'état d'hydroxyde de fer-II.
b) à pH acide et avec utilisation d'agents modifiants des germes, on oxyde totalement l'hydroxyde de fer-II précipité en germes fins d'α-FeOON. en réglant la surface spécifique BET des germes à plus de 170 m²/g par une haute vitesse d'injection des gaz et une basse viscosité de la suspension.
c) on procède ensuite à la maturation de ces germes par un traitement à la chaleur et
d) on précipite le reste du fer-II et on l'oxyde également en α-FeOOH, en réglant la surface spécifique BET du pigment fini en fin d'opération à plus de 120 m²/g et moins de 150 m²/g par réglage optimal de la durée de maturation au stade opératoire c).

5. Oxydes de fer pigmentaires jaunes de la forme α-FeOOH, à haute transparence, obtenus selon la revendications 4 et caractérisés en ce que, simultanément.
a) l'écart de teinte sur un fond noir entre une couche de 100 µm d'épaisseur d'un vernis clair non pigmenté et d'une peinture pigmentée à 5 % en poids sur son résidu sec est inférieur à 4,5 unités CIELAB et
b) une mesure faite sur la même peinture sur un fond blanc présente une saturation C*_{ab} égale ou supérieure à 45 unités CIELAB.

6. Utilisation des oxydes de fer pigmentaires jaunes selon la revendication 5 pour la coloration de peintures et de résines synthétiques.
